# EUROPEAN PATENT APPLICATION

(11) **EP 2 711 556 A2**
(43) Date of publication of application: **26.03.2014**
(21) Application number: 13180350.4
(22) Date of filing: 14.08.2013
(51) Int. Cl.: F04D 29/16, F04D 29/52

(54) **An engine casing assembly**

(30) Priority: 25.09.2012 GB 201217055
(71) Applicant: Rolls-Royce plc, London SW1E 6AT (GB)
(72) Inventor: Dimelow, Stephen, Uttoxeter, Staffordshire ST14 5AQ (GB)
(74) Representative: Yeomans, Victoria Jane Anora

(57) **Abstract**

A gas turbine engine casing assembly (200)has a first casing element (210) which is located radially outward of one or more rotating aerofoil elements (170) of the gas turbine engine.

The first casing element (210) is radially enclosed by a track element (220) , a septum layer (130), a second casing element (140) and a fan case (150).

The track element (220) is formed from an abrasion resistant material in order to prevent abrasion of the septum layer (130) during excoriation of the first casing element (210).

## Description

### Field of the Invention

This invention relates to a gas turbine engine casing assembly and particularly, but not exclusively, to a casing assembly for the fan of a turbofan gas turbine engine for an aircraft.

### Background to the Invention

Turbofan gas turbine engines for powering aircraft generally comprise *inter alia* a core engine, which drives a fan. The fan comprises a number of radially extending fan blades mounted on a fan rotor which is enclosed by a generally cylindrical fan casing.

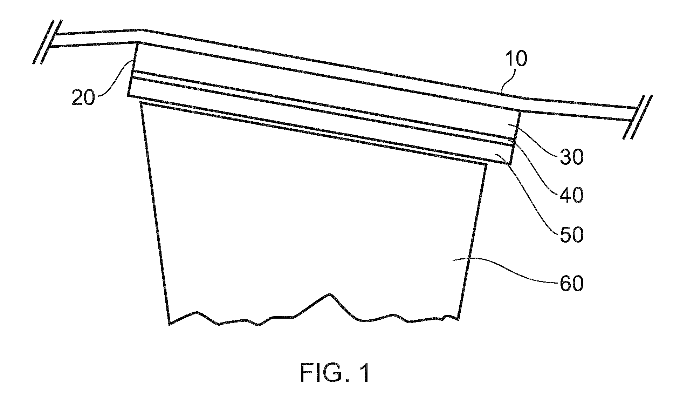

It is known to provide the fan casing with a fan track liner which together incorporate a containment system, designed to contain any released blades or associated debris. Figure 1 shows a partial cross-section of such a casing and fan track liner.

In addition to providing a blade containment system, the fan track liner includes an annular layer of abradable material which surrounds the fan blades. During operation of the engine, the fan blades rotate freely within the fan track liner. At their maximum extension of movement and/or creep, or during an extreme event, the blades may cut a path into this abradable layer creating a seal against the fan casing and minimising air leakage around the blade tips.

Figure 1 shows a partial cross-section of such a known arrangement in which a fan casing 10 encloses a fan track liner assembly 20 which in turn surrounds the fan blades 60. The fan track liner assembly comprises an energy-absorbing honeycomb material layer 30 to which is bonded, on a radially inward surface, a septum layer 40 and a layer of abradable material 50.

The annular layer of abradable material is bonded to the fan track liner by means of an interposed septum layer. This septum layer is generally formed from a glass fibre composite material.

If the abradable layer is damaged it can be repaired by cutting out the damaged portion and filling the cut out void back to the original dimensions of the abradable layer. However, if the damage extends through the septum layer between the abradable layer and the remainder of the fan track liner, it is not possible repair such damage and it is necessary to replace the entire thickness of the fan track liner. This is because any damage to the septum layer may compromise the fan blade containment properties of the fan track liner.

In addition, there is a risk that even when only the abradable layer is damaged, the septum layer itself may be damaged during the repair process, for example through penetration by cutting or grinding tools. As mentioned above, such septum layer damage will require complete replacement of the fan track liner albeit only locally to the septum layer penetration.

Such replacement of the fan track liner is considerably more costly and time consuming than replacement of the abradable layer only.

### Statements of Invention

According to a first aspect of the present invention there is provided a gas turbine engine casing assembly, comprising:
a first casing element located radially outward of one or more rotating aerofoil elements of the gas turbine engine;
a second casing element located radially outward of the first casing element; and
a septum layer interposed between the first casing element and the second casing element;
wherein a track element is interposed between the first casing element and the septum layer,
the track element being adapted to prevent abrasion of the septum layer during excoriation of the first casing element.

Both the abradable layer and the adjoining septum layer are formed from materials having similar hardness properties. A typical abradable layer is formed from an aramid paper honeycomb material which is filled with a syntactic epoxy resin. As mentioned above, a typical septum layer is formed from a glass-fibre reinforced sheet material.

As previously mentioned, during repair of a damaged abradable layer it is necessary to cut away a region of the abradable layer around the damaged area. This is typically carried out by hand operated mechanical cutting or grinding tools, such as abrasive wheel grinders or cutting discs.

Due to the similarity between the mechanical properties of the abradable layer and the adjoining septum layer, there is a significant risk of the cutting or grinding tool breaking into and through the septum layer during the process of removing the damaged abradable material.

The abrasion resistant track element protects the septum layer between the abradable layer and the energy-absorbing honeycomb layer from mechanical damage by accidental penetration during the excoriation of the portion of abradable layer which is being replaced.

Optionally, the track element is formed from a sheet material selected from the group comprising metals and metal alloys.

The metal track element provides mechanical protection to the septum layer from mechanical damage caused by the mechanical cutting or grinding tools which are used to remove a damaged portion of the abradable layer.

Optionally, the casing assembly has a longitudinal axis, and the track element extends along the longitudinal axis, the track element having a first end portion and a second end portion with the first casing element being received between the first end portion and the second end portion.

In order to be effective at preventing abrasion of the septum layer during excoriation of the abradable layer, it is desirable for the track element to extend over the entire radially outermost surface of the abradable layer.

Optionally, each of the first end portion and the second end portion extends radially inwardly to a radially inward surface of the first casing element to form a contiguous gas-washed surface therewith.

Alignment of the first end portion and the second end portion with a radially inward surface of the first casing element minimises aerodynamic losses and smoothes gas flow through the engine.

Optionally, each of the first end portion and the second end portion is formed with a serpentine profile having a radially inwardly curved section and a radially outwardly curved section.

The use of a serpentine profile at each of the first and second end portions of the track element increases the mechanical stiffness of the track element. This makes the track element further resistant to damage from the process of excoriation of the abradable layer. In other words, contact between a mechanical grinding tool and one or other of the serpentine end portions is less likely to result in plastic deformation of the respective track element end portion.

Optionally, each of the first end portion and the second end portion is formed as a radially inwardly projecting lip.

This arrangement of the first end portion and the second end portion of the track element forms an annular cavity which accommodates the abradable layer. The radially inwardly extending end portions provide additional protection to the remainder of the fan track liner assembly from damage which might be caused by the excoriation of the abradable layer.

Optionally, the track element is bonded to the septum layer.

This prevents relative movement between the track element and the septum layer. This in turn makes the track element more effective in preventing abrasion of the septum layer during excoriation of the abradable layer.

Optionally, the track element is bonded to the first casing element.

This prevents relative movement between track element and the first casing element. This in turn prevents wear caused by such relative movement.

In addition, it ensures that the radially innermost face of the abradable layer is precisely located within the fan casing assembly. This is important in ensuring that the correct clearance is maintained between the tips of the fan blades and the radially innermost surface of the abradable layer.

Optionally, the track element is formed as an integral annular ring.

By forming the track element as an integral ring, its mechanical stiffness can be maximised which makes it more effective at preventing abrasion of the septum layer.

Optionally, the track element is formed as a plurality of co-operating segments.

Alternatively, the track element may be formed as a plurality of segments which are then assembled within the fan track liner to form an annular ring. This arrangement makes assembly of the track element easier and more straightforward but reduces the mechanical stiffness of the installed track element.

According to a second aspect of the present invention there is provided a gas turbine fan casing comprising the gas turbine engine casing assembly according to the first aspect of the invention.

According to a second aspect of the present invention there is provided a gas turbine engine comprising a gas turbine engine casing assembly according to the first aspect of the invention.

Other aspects of the invention provide devices, methods and systems which include and/or implement some or all of the actions described herein. The illustrative aspects of the invention are designed to solve one or more of the problems herein described and/or one or more other problems not discussed.

### Brief Description of the Drawings

There now follows a description of an embodiment of the invention, by way of non-limiting example, with reference being made to the accompanying drawings in which:
Figure 1 shows a schematic sectional view of a known fan track liner assembly;
Figure 2 shows a schematic sectional view of a fan track liner assembly according to a first embodiment of the present invention;
Figure 3 shows a schematic sectional view of a fan track liner assembly according to a second embodiment of the present invention;
Figure 4 shows a schematic sectional view of the fan track liner assembly of Figure 3 showing a damaged portion of the first casing element; and
Figure 5 shows a schematic sectional view of the fan track liner assembly of Figure 3 showing how the track element protects the septum layer during a repair process.

It is noted that the drawings may not be to scale. The drawings are intended to depict only typical aspects of the invention, and therefore should not be considered as limiting the scope of the invention. In the drawings, like numbering represents like elements between the drawings.

### Detailed Description

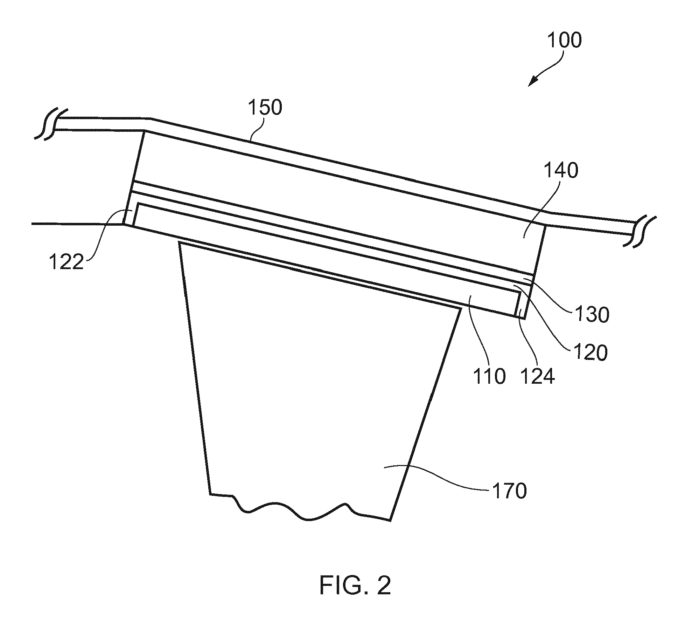

Referring to Figure 2, a gas turbine engine casing assembly according to a first embodiment of the invention is designated generally by the reference numeral 100. The gas turbine engine casing assembly 100 comprises a first casing element 110, a track element 120, a septum layer 130, a second casing element 140 and a fan case 150.

The first casing element 110 has a radially proximal surface 112 and a radially distal surface 114, and the second casing element 140 has a radially proximal surface 142 and a radially distal surface 144.

The first casing element 110 takes the form of an abradable material such as, for example, an aramid paper honeycomb dipped in phenolics resin with the honeycomb cells being filled with a closed-cell expanding syntactic epoxy material. The first casing element 110 provides a surface against which the fan blade 170 is able to rub and cut a path for itself. For example, the fan blades 170 may rub against the first casing element 110 and form a seal during normal engine operation.

The first casing element 110 at least partially encloses one or more rotating aerofoil structures 170. These aerofoil structures 170 may comprise blades of a gas turbine engine, in particular compressor fan blades.

The second casing element 140 is disposed radially distal to and encloses the first casing element 110. The second casing element 140 is formed from an energy-absorbing material, typically a honeycomb material formed from a metal, such as aluminium, or from a non-metallic material, such as Nomex™ (a flame resistant aramid material)

The fan case 150 is radially distal to and encloses the second casing element 140. Typically, the fan case 150 is formed from a metal forging, generally either steel or a titanium alloy.

The septum layer 130 is interposed between and adhesively bonded to each of the first casing element 110 and the second casing element 140. The septum layer 130 is typically formed from a plurality of layers of glass-reinforced composite material in an epoxy resin.

The track element 120 has a first end portion 122 and a second end portion 124, and is interposed between the first casing element 110 and the septum layer 130. The track element 120 is preferably formed from an aluminium alloy to minimise weight, but may alternatively be formed from steel or a titanium alloy.

In the present embodiment, the track element 120 is adhesively bonded to each of the first casing element 110 and the septum layer 130. In other embodiments the track element may be adhesively bonded to either only one of, or neither of, the first casing element 110 and the septum layer 130.

Each of the first end portion 122 and the second end portion 124 of the track element 120 is formed as a radially inwardly projecting lip. In this way, the track element 120 forms an annular tray which accommodates the first casing element 110. As described above, the first casing element 110, being intended to be abraded by the fan blades 170 has an axial length which is greater than the axial length of the fan blades 170.

The lip at of the first end portion 122 and the second end portion 124 is arranged to be contiguous with the radially proximal surface 112 of the first casing element 110. This ensures that there is no interruption to the gas flow through the engine in the region of the track element 120.

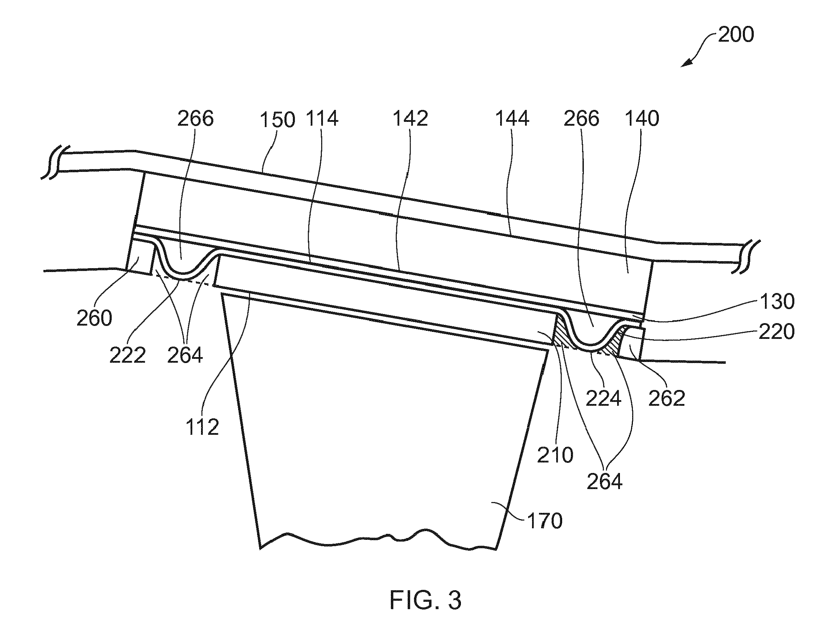

Referring to Figure 3, a gas turbine engine casing assembly according to a second embodiment of the invention is designated generally by the reference numeral 200. Features of the casing assembly 200 which correspond to those of casing assembly 100 have been given corresponding reference numerals for ease of reference.

The gas turbine engine casing assembly 200 comprises a first casing element 210, a track element 220, a septum layer 130, a second casing element 140 and a fan case 150.

The general arrangement of the casing assembly 200 is similar to that of the casing assembly 100 of the first embodiment. In other words, the first casing element 210 at least partially encloses the aerofoil structures 170, and is in turn enclosed by, in sequence, the track element 220, the septum layer 130, the second casing element 140 and the fan case 150.

The track element 220 is formed with a first end portion 222 and a second end portion 224. Each of the first end portion 222 and second end portion 224 is formed with a serpentine profile which first curves radially inwardly and then radially outwardly. For each of the first and second end portion 222,224, the radially innermost part of the serpentine profile is contiguous with the radially proximal surface 112 of the first casing element 110.

The serpentine profile at the first and second end portions 222,224 can be cycloidically shaped to spread any impact loading onto an axial length of the septum layer 130.

The serpentine profile at each of the first and second end portions 222,224 defines a first void 266 on a radially distal surface of the respective end portion 222,224. These first voids 266 can be filled with a suitable filler material to protect the end portion 222,224 against impact damage by foreign objects or ice.

As shown in Figure 3, the first casing element 110 has a rectangular profile in axial cross-section. When placed within the track element 220, the geometry of the serpentine profiles at the first and second end portions 222,224 results in second voids 264 being formed between the serpentine profile at the first and second end portions 222,224 and the respective axial ends of the first casing element 110. These second voids 264 may be filled with a suitable filler material to provide a contiguous gas-washed surface at the radially distal surface 112 of the first casing element 110.

In use, the first casing element 110,210 may require full or partial replacement for several reasons. For example, excessive abrasion of the first casing element 110,210 by the fan blades 170 may result in an excessively large tip clearance between the fan blades 170 and the distal surface 112 of the first casing element 110,210. This large tip clearance can significantly adversely impact the performance of the engine.

Alternatively, impact damage caused by ingress into the engine of a foreign object such as stones or other debris can result in gouging of a portion of the first casing element.

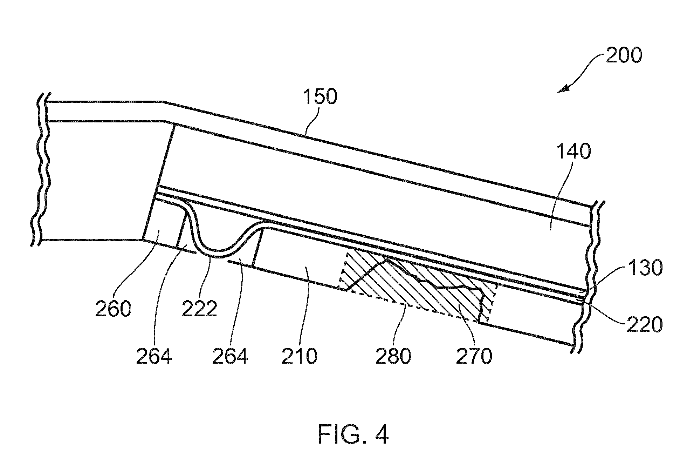

Figure 4 shows an engine casing assembly according to the second embodiment of the invention in which the first casing element 210 has sustained damage and a portion 270 of the first casing element 210 is missing. Repair of this first casing element 210 involves cutting out a replaced portion 280 (indicated by the hatched area in Figure 4).

The step of cutting out the replaced portion 280 is generally undertaken using a power grinder with an abrasive or cutting disc. The first casing element 110,210 can readily be removed in this manner and the resulting void dressed back to a radially distal surface of the track element 120,220. Contact between the power tooling and the track element is acceptable provided such contact only results in light scoring of the track element 120,220.

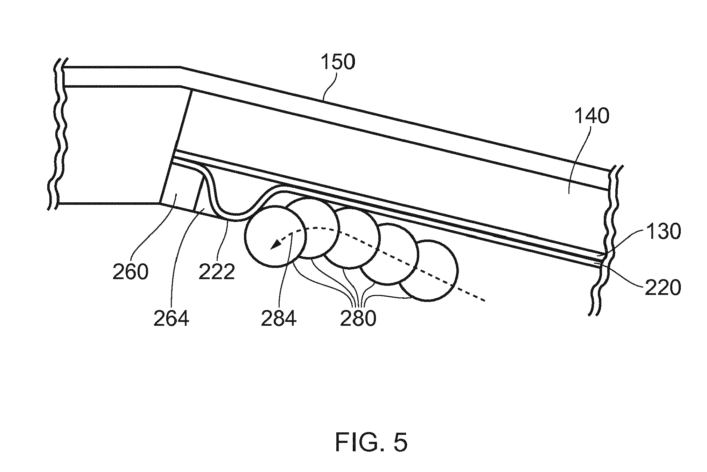

As shown in Figure 5, in instances where the portion of the first casing element 110,210 to be removed is adjacent to an axial end of the first casing element, or where the entire first casing element 110,210 is to be removed, the respective end portion of the track element 120,220 prevents the power tooling from inadvertently cutting into the septum layer 130.

The foregoing description of various aspects of the invention has been presented for purposes of illustration and description. It is not intended to be exhaustive or to limit the invention to the precise form disclosed, and obviously, many modifications and variations are possible. Such modifications and variations that may be apparent to a person of skill in the art are included within the scope of the invention as defined by the accompanying claims.

## Claims

1. A gas turbine engine casing assembly (100;200), comprising:
a first casing element (110;210) located radially outward of one or more rotating aerofoil elements (60) of the gas turbine engine;
a second casing element (140) located radially outward of the first casing element (110;210); and
a septum layer (130) interposed between the first casing element (110;210) and the second casing element (140);
wherein a track element (120;220) is interposed between the first casing element (110;210) and the septum layer (130),
the track element (120;220) being adapted to prevent abrasion of the septum layer (130) during excoriation of the first casing element (110;210).

2. The gas turbine engine casing assembly (100;200) as claimed in Claim 1, wherein the track element (120;220) is formed from a sheet material selected from the group comprising metals and metal alloys.

3. The gas turbine engine casing assembly (100;200) as claimed in Claim 1 or Claim 2, the casing assembly (100;200) having a longitudinal axis,
wherein the track element (120;220) extends along the longitudinal axis, the track element (120;220) having a first end portion (122;222) and a second end portion (124;224) with the first casing element (110;210) being received between the first end portion (122;222) and the second end portion (124;224).

4. The gas turbine engine casing assembly (100;200) as claimed in Claim 3, wherein each of the first end portion (122;222) and the second end portion (124;224) extends radially inwardly to a radially inward surface of the first casing element (110;210) to form a contiguous gas-washed surface therewith.

5. The gas turbine engine casing assembly (100;200) as claimed in Claim 3 or Claim 4,
wherein each of the first end portion (222) and the second end portion (224) is formed with a serpentine profile having a radially inwardly curved section and a radially outwardly curved section.

6. The gas turbine engine casing assembly (100;200) as claimed in Claim 3 or Claim 4,
wherein each of the first end portion (122) and the second end portion (124) is formed as a radially inwardly projecting lip.

7. The gas turbine engine casing assembly (100;200) as claimed in any one of Claims 1 to 6, wherein the track element (120;220) is bonded to the septum layer (130).

8. The gas turbine engine casing assembly (100;200) as claimed in any one of Claims 1 to 7, wherein the track element (120;220) is bonded to the first casing element (110;210).

9. The gas turbine engine casing assembly (100;200) as claimed in any one of Claims 1 to 8, wherein the track element (120;220) is formed as an integral annular ring.

10. The gas turbine engine casing assembly (100;200) as claimed in any one of Claims 1 to 8, wherein the track element (120;220) is formed as a plurality of co-operating segments.

11. A gas turbine fan casing comprising the gas turbine engine casing assembly (100;200) as claimed in any one of Claims 1 to 10.

12. A gas turbine engine comprising a gas turbine engine casing assembly (100;200) as claimed in any one of Claims 1 to 10.
